# EUROPEAN PATENT SPECIFICATION

(11) **EP 1 264 261 B1**
(45) Date of publication and mention of the grant of the patent: **16.11.2005**
(21) Application number: 01911922.1
(22) Date of filing: 14.03.2001
(51) Int. Cl.: G06F 17/60, H04L 29/12, H04L 12/26, H04L 29/06

(54) **MONITORING OPERATION OF AND INTERACTION WITH SERVICES PROVIDED OVER A NETWORK**
ÜBERWACHUNG VON UND INTERAKTION MIT NETZWERKDIENSTEN
OPERATION DE SURVEILLANCE DE SERVICES FOURNIS SUR UN RESEAU ET INTERACTION AVEC CES SERVICES

(30) Priority: 14.03.2000 GB 0006128; 07.04.2000 US 545882; 22.01.2001 GB 0101624
(43) Date of publication of application: 11.12.2002
(73) Proprietor: Speed-trap.com Ltd., Newbury, Berkshire RG19 6HN (GB)
(72) Inventor: DUCKETT, Malcolm, John, Medstead, Hampshire GU34 5LY (GB); BARKER, Jeremy, Andrew, Charles, Speen, Newbury, Berkshire RG14 1QL (GB); NEWMAN, Rhys, Andrew, Sandford-on-Thames,Oxon OX4 4YF (GB)
(74) Representative: Williams, Michael Ian
(86) International application number: PCT/GB2001/001132
(87) International publication number: WO 2001/069386

(56) References cited:
- EP-A- 0 784 276
- WO-A-98/10349
- WO-A-99/13423
- US-A- 5 737 592
- US-A- 5 864 837
- US-A- 5 958 008
- US-A- 5 974 572

## Description

This invention relates to monitoring operation of and interaction with services provided over a network. In particular it relates to monitoring services provided over an intranet and/or the Internet and particularly the World Wide Web, in terms of performance, usability, security, auditing and user interaction.

There is currently great interest and activity in providing services via networks and particularly the World Wide Web. However, some difficulties arise for providers and users in providing and using such services. In particular, waiting for web pages to download from the World Wide Web can be time consuming and this factor together with a poorly designed website can severely limit the efficiency of web based services. Whilst these difficulties with web based services are widely appreciated, there have, to date, been no satisfactory systems available for gaining data concerning the effectiveness and usability of any given web based service. Existing systems tend to provide generalised information by monitoring networks and servers.

It has been appreciated that obtaining detailed information concerning the use made of websites by individual users can be invaluable in enhancing the services which are provided over the Internet and particularly the World Wide Web.

It is an object of this invention to provide a method or system for monitoring operation of and interaction with services provided over a network. At least some embodiments are directed to obtaining information concerning how the performance of the service is perceived by users.

WO 98/10349 discloses a system in which monitoring instructions, which may be in the form of an applet, are sent from a content provider site to a content display site to allow monitoring of content displayed at the content display site. Monitoring information is sent either to the content provider site or to a remote site.

In the system disclosed in WO 98/10349, the monitoring instructions are instructions which are appropriate for the particular pages or page which are to be displayed.

According to a first aspect of the invention there is provided a method for monitoring operation of a service provided over a network to a plurality of end user communications units, the method comprising the step of receiving at a central unit, information obtained at each end user communications unit under the control of respective applets running within browsers during monitoring of activity associated with the service, characterised in that the method comprises, before the above step, the further steps of:
receiving, at the central unit, activation notifications from active applets; and
outputting, from the central unit, respective configuration messages to each communications unit from which activation notification has been received, which messages are arranged to configure the respective applets so as to control the information sent to the central unit.

The information obtained may comprise details of a user's interaction with an electronic page, such as a web page, accessed when using the service.

Said details may include a log of pointing device position and selecting operation. The method may comprise the further step of analysing the data received at the central unit.

According to a second aspect of the invention there is provided a method for monitoring operation of services provided over a network to a plurality of end user communication units, the method comprising, at each end user communication unit, under control of an applet running within a browser, the steps of:
monitoring activity associated with a service;
transmitting information obtained in the monitoring step to a central unit; and
in addition, before the above steps, the further steps of outputting an activation notification from the communication unit to the central unit; and receiving a configuration message from the central unit in response to the activation notification, which message is arranged to configure the applet so as to control the information sent to the central unit.

The service may be accessed via at least one web, or other electronic, page and the method may comprise the further step of identifying the interactive content of a page as the page is visited and loaded into the communications unit.

The step of identifying the interactive content preferably includes determining information concerning the relevance and/or context of the interactive content.

Preferably at least some of the information gained in the identifying step is included in the information output by the communications device.

Preferably the step of identifying the interactive content includes determining information concerning the relevance and/or context of the interactive content and the method includes the further step of associating this contextual information with information concerning monitored activities.

Said details may include a log of pointing device position and selecting operation.

Preferably the applet runs within a browser and runs in a language which is cross-platform.

According to a third aspect of the invention there is provided an end user communications unit for use in a system for monitoring operation of services provided over a network, the communications unit being arranged to allow reception of services provided over the network, and being arranged, under control of an applet running within a browser, to monitor activity associated with a service provided over the network and to output information so obtained to a central unit, the end user communications unit comprising:
means for outputting an activation notification from the communications unit to the central unit; and
means for receiving a configuration message from the central unit in response to the activation notification, which message is arranged to configure the applet so as to control the information sent to the central unit.

The service may be accessed via at least one web, or other electronic, page and the communications unit may be arranged for identifying the interactive content of a page as the page is visited and loaded into the communications unit.

Preferably, identifying the interactive content includes determining information concerning the relevance and/or context of the interactive content.

The communications unit may be arranged to include at least some of the information gained in the identifying step in the information output by the communications device.

The communications unit may be arranged so that identifying the interactive content includes determining information concerning the relevance and/or context of the interactive content and the communications unit is arranged for associating this contextual information with information concerning monitored activities.
The method may further comprise the steps of:
monitoring and recording activities instigated by at least one user when using the service by interacting with one or more electronic page displayed in a browser on a respective communications unit, the recorded activities including a log of pointing device position on the or each page; and
playing back activities recorded in the above step, wherein the playing back step includes redisplaying the electronic pages originally displayed and redisplaying user interaction therewith.
The method may further comprise the steps of monitoring, at the communications unit, for a predetermined sequence of occurrences associated with a service provided over the network and outputting information over the network to a central unit when the predetermined sequence of occurrences is detected.

The predetermined sequence of occurrences may be operator definable.

The information may comprise a message indicating the detection of the predetermined sequence.

The information may comprise data concerning the occurrences themselves.

The information sent to the central unit may relate to at least some of the source, such as HTML, originally received by the communications unit in relation to the service.

The information may comprise some or all of the available source for a selected page of interest.

The information sent to the central unit may comprise a checksum calculated on the basis of at least some of the source, such as HTML, originally received by the communications unit in relation to the service.

The checksum may be calculated on all of the available source for a selected page of interest.

The central unit may comprise a page cache including some of the source or the full source for pages and corresponding checksums and the method may comprise the further steps of, receiving, from a communications unit, a checksum calculated from the source of a page of interest originally delivered to the communications unit as part of the service, comparing the received checksum with those stored in the page cache and requesting the communications unit to send the all available source for the page of interest if no checksum match is found in the comparing step.

Sessions may be created between the central unit and respective communications units and the method may comprise the further step of supplying respective session identifiers to respective end user communications units at the beginning of each session, in response to receipt of activation notification from the respective communications units.

A plurality of central units may be provided, each arranged for receiving information obtained at respective communication units during monitoring of activity associated with respective services.

Where there are plurality of central units, preferably sessions between respective communications apparatus and the plurality of central units are created and assigned session identifiers, so that activity associated with a plurality of separate services may be monitored in one session and associated with a common session identifier.

The method may comprise the step of one of the central units in the plurality supplying the session identifier to a respective end user communications unit at the beginning of the session, in response to receipt of activation notification from the communications unit.

The invention may also provide a computer program comprising code portions which when loaded and run on computer means cause the computer means to execute any one of the methods defined in claims 1 to 29.

Of course, the program may be embodied on a machine readable data carrier such as a signal, RAM, ROM or disk.

The present invention can allow the performance of the service as perceived by users to be monitored.

Such arrangements make use of the aggregate computing power available at the many user communications units which are typically connected to a network rather than attempting to support such data gathering with a single or a few central servers. It is also possible to collect data which is specific to the experience of each of a number of users.

A further example relates to a method of testing a server based system comprising the steps of:
monitoring and recording activities instigated by at least one user when using the services supported by the server system; and
playing back activities recorded in the above step.

The end user communications unit may be arranged to allow reception of services supported by a server wherein, the end user communications unit is arranged for monitoring and recording activities instigated by a user when using the services supported by the server system, and for playing back such recorded activities.

Such methods and apparatus allow various aspects of a server supported system to be tested and investigated. In particular, it is possible to simulate heavy usage of the system and investigate how the system behaves. Such testing may be termed load testing and might be used to establish the effect of say 1000 or 10000 users simultaneously attempting to use a web site. There is an advantage in the above defined system because the activities run in the test can reflect the activities of real use rather than artificial test sequences.

It will be appreciated that playing back of recorded activities refers to the apparatus itself, under the control of suitable software, running through any and all steps instigated by a user when the recording was carried out.

In developments of the example, activity associated with the service may be monitored during the play back of the recorded activities. This monitoring may be carried out in substantially the same way as defined in any of the other aspects of the invention defined above. In particular, the activity may be monitored at each communications unit and sent to the central unit.

In this application "activity"/ "activity instigated by the user" includes actions directly carried out by the user such as "clicking" of a mouse on an icon and actions carried out by the system without the user being directly involved, for example, data being sent and/or received. In practice activity will typically comprise a stream of occurrences consisting of actions taken by the user and events taking place within communications unit.

The methods may comprise the further step of analysing the data obtained during the monitoring step. The apparatus may be arranged for analysing monitored data. The analysis may comprise filtering the data so that it can be presented in a more convenient form. One or more filter rules may be specified for use in the filter process. The or each filter rule may define a standard event which comprises a predetermined set of occurrences. One or more filter rule may specify at least one parameter, values for which are to be extracted from the predetermined set of occurrences. The filtered data may be presented in terms of standard events and associated values. Preferably the analysis is carried out at the central unit.

The term end user communications unit is used broadly in this application and should be taken to include conventional computers including PCs, interactive television based systems, landline and mobile communications (telephone) based systems and any other such system which is able to receive information provided across a network. The system may be used with units operating in accordance with WAP (Wireless Application Protocol).

The central unit to which monitoring information is sent is generally distinct from any server supporting services which are to be monitored. The central unit may belong to an organisation which is interested in gathering its own performance information or to an organisation administering the performance monitoring system on behalf of customers. Information collated at the central unit may be accessible via a web site. Customers may be allowed access to information at the central unit which relates to the services which they supply. The central unit may comprise a plurality of devices, for example servers, operating in parallel. In some embodiments more than one central unit may be provided.

The network over which services are provided typically comprises an intranet and/or the Internet. The services provided are typically accessible via the World Wide Web. Thus the services are typically accessible via a web site. A user's communications unit may run a browser. The browser may be a generally available browser such as MS Internet Explorer or Netscape Navigator.
Alternatively a dedicated browser may be provided. The browser may be an embedded application in, for example, a WAP communications unit.

Any one or any combination of the monitoring, outputting, recording and play back functionality at the communications unit may be facilitated by an applet. Preferably the applet runs in a language which is cross-platform. This facilitates the system functioning on a large range of different end user communications units. The applet may be confined in an environment such that the applet's access to the end user's communications unit is restricted. This can significantly enhance security.

In this application the term applet is used broadly to mean an application which runs within a browser. The applet may be in any appropriate language, for example Java and/or JavaScript. However, use of the term applet should not be taken to specifically imply that the applet is written in/runs in Java. The applet may be persistent or non-persistent. Thus, the applet may be resident in the browser at all times so that activity relating to all pages is monitored or the applet may be associated only with certain web pages so that only activity in relation to such pages is monitored. In the persistent case the applet is installed, at the communications unit, typically by a user or system administrator. The applet might also be built in by a supplier, for example, it might be supplied as part of a browser. In the non-persistent case the applet is loaded and deleted, at the communications unit, as a page or frame is visited and left respectively.

The communications unit may receive the service via a proxy server. Proxy servers are well known in the art of computer networks, basically, the proxy server is sited between the end user and the remainder of the network, traffic in both directions passes through the proxy server. The proxy server may be arranged to insert the applet into all pages or selected pages which pass through it on the way to an end user communications unit. The proxy server may act as a central unit, particularly in the issuance of configuration messages and/or the collection of monitoring data. Thus the central unit may comprise a proxy server.

The communications unit may be arranged so that as a page is visited and loaded into the unit, the interactive content of the page is identified. For example, a page may include a button which can be "pressed" by a user and field allowing the input of text. In the identifying step, the unit may identify that the button and text field are present. If the button is pressed or text is entered this action may be monitored and recorded or reported.

The identifying step may include determining information concerning the relevance and/or context of the interactive content. For example, the relevance, context, effect etc of a user entering text or pressing the button may be identified. This information can be associated with any recorded or reported action.

In at least some embodiments any one or any combination of the following may be monitored: start of page load, completion of page load, completion of image or frame load, user input of data starts, user input of data finishes, user data (including details of key strokes, in terms of timing/speed of operation and/or actual keys pressed), hot spot and hyperlink roll-overs, hyperlink selection, mouse position, field selections, browser toolbar usage, next Uniform Resource Locator (URL) selected, user editing field information, user identification (log on name, device, Internet Protocol (IP) address etc.).

The data output and/or sent to a central unit as a result of the monitoring process may be encrypted. Often, certain sensitive data, such as credit card details, may be irrelevant. Thus any such sensitive data may be replaced by arbitrary symbols in the information output and/or sent to a central unit.

Timing means may be provided for giving time stamp references to activities. Preferably a universal time reference source is provided at the central unit.

In at least some embodiments any one or any combination of the following real time displays or reports may be generated for a site being monitored:
number of visitors per unit time, number of new customers, number of customers who ordered, number of customers by location, number of visitors who tried and
failed to order, total web site orders, value of total web site orders, usability of web site, apparent speed per customer, typical routes through site, page hot spots or trouble spots, time to complete transaction pair, events by time of day, average/minimum/maximum time to complete transaction, page load time by time of day, time from page load to page exit, exit route from each page, name of user by time of day, IP address of user by time of day.

The or each communications unit may, amongst other things, function as a data capture module. The central unit may, amongst other things, function as a database server.

Except where the context prohibits any of the subsidiary features defined above should be considered compatible with each of the aspects defined above. Thus in many cases the ordering of the subsidiary features relative to the aspects of invention should be ignored.

Embodiments of the present invention will now be described, by way of example only, with reference to the accompanying drawings in which:-
Figure 1 schematically shows the architecture of a system for monitoring the performance of services provided over a network;
Figure 2 schematically shows a system for monitoring the performance of a website based service provided over the World Wide Web wherein the monitoring activity takes place within a browser;
Figure 3 schematically shows the steps carried out in monitoring activity associated with a web page in the system shown in Figure 2;
Figure 4 schematically shows a process used to test a server system;
Figure 5 schematically shows internal architecture of a database server; and
Figure 6 shows an example of data stored in a data log of the database server shown in Figure 5.

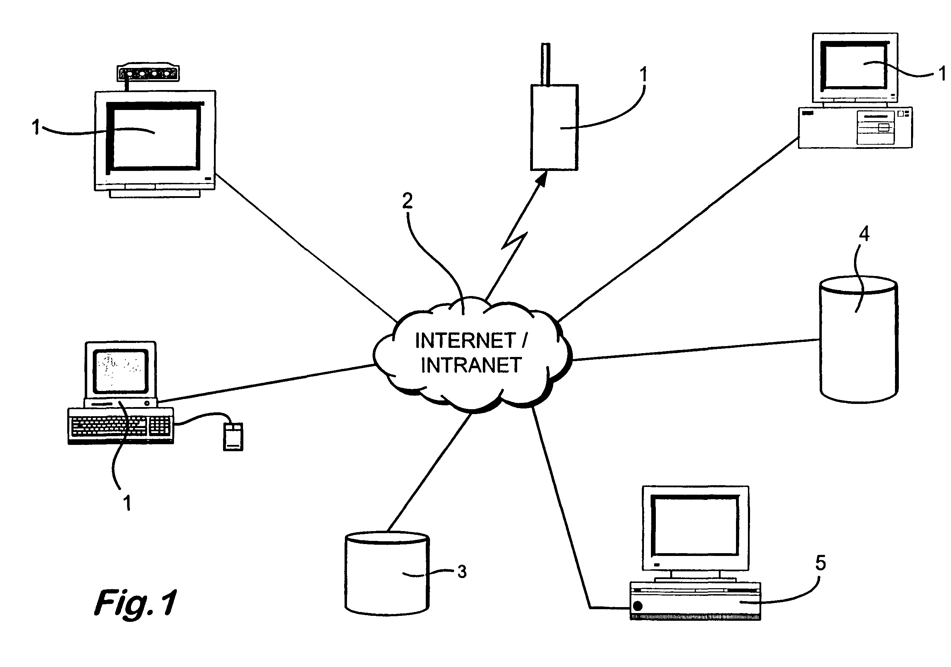

Figure 1 schematically shows the architecture of a system for monitoring the performance of services provided over a network.

A plurality of end user communication units 1 which can include conventional computers, interactive television based systems and wireless communication systems etc., are connected to an intranet or the Internet network 2 and thus are able to access services supported by a large number of different servers 3 (only one of which is shown in Figure 1). A central unit 4 to which data concerning the performance of services provided over the network is to be sent, as will be explained in more detail below, is also connected to the intranet or Internet 2. A customer's computer system 5 is connected via the intranet or Internet 2 to the central unit 4 to allow the customer to extract information concerning the performance of services in which he is interested. Although not shown in detail it will be appreciated by those skilled in the art that within the intranet or Internet 2 there will be a number of intermediate devices such as routers, servers and other devices. These are all potentially connectable to the central unit 4 and as such data concerning performance of these intermediate devices may also be monitored and sent to the central unit 4. A simplified description of the functioning of the system is given below.

At each of the end user units 1 a user will access a service supported by a web server 3 via the intranet or Internet 2. As this service is used by the user then, under the control of appropriate software, each end user unit 1 monitors activities instigated by the user which relate to the service being used. The data obtained during this monitoring step is then sent from each of the end user communication units 1 via the intranet or Internet 2 to the central unit 4. The central unit 4 functions as a database server and performs a number of functions as will be described in more detail below. At this point it is enough to note that all of the data obtained at each of the end user communication units 1 is stored at the central unit 4 and is put into a useful form such that a customer may obtain data concerning the services in which he is interested either in the form of hard copy reports or via his computer system 5 and the intranet or Internet 2. In particular it is envisaged that the customer will operate a web site based service and will desire information concerning the performance of that website.

Each of the end user communication units 1 includes a processor, a memory, and other elements which are arranged under the control of appropriate software to capture data concerning various activities which take place in respect of the service being provided over the network 2. Different pieces of software are provided to give this data capture function in different circumstances. Different pieces of such software will be described in more detail below.

As mentioned above data capture modules can be arranged to collect information from a variety of sources. In particular data can be collected by monitoring activities within a user's browser, from the network delivering data to the user, and from servers hosting the web pages or applications which a user is using and/or running. However, it will be appreciated by those skilled in the art that the collection of data need not necessarily be limited to the above-mentioned sources.

The central unit 4 includes a processor, a memory and other elements which are arranged under the control of appropriate software to act as a database server which is used for receiving, storing, analysing and organising data captured by any of the data capture modules as well as generating reports concerning such data.

Appropriate software is also provided to customers for use with their computer systems 5 in order to further process and interpret the data stored at the central unit 4. In particular it is possible for customers to generate reports, analyse statistics and generate graphs on the basis of the collected data.

It should be noted that the methods and apparatus for monitoring and/or testing the operation of services provided over a network which this application concerns may be used in relation to any appropriate service provided over a network. The methods and apparatus are not limited to use with services provided via websites accessible over the World Wide Web. However, for the sake of clarity the remaining detailed description will be phrased in terms exclusively relating to services that are accessible via a website and the World Wide Web.

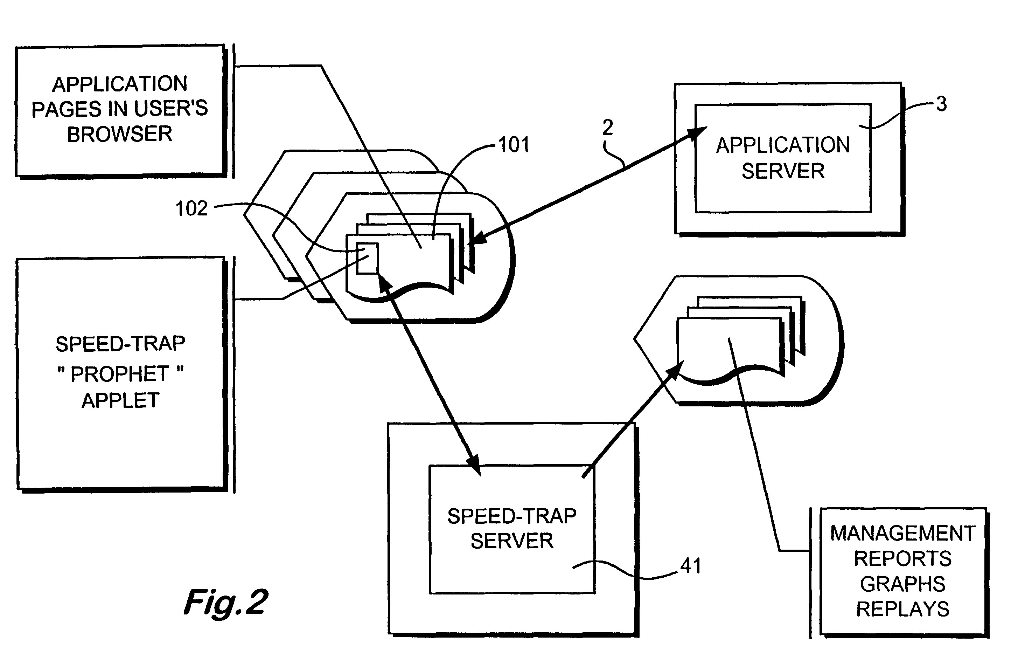

Figure 2 schematically shows a system for monitoring the performance of a website based service provided over the World Wide Web wherein the monitoring activity takes place within a browser such as Netscape Navigator or MS Interned Explorer loaded on a user's computer system which acts as a communications unit 1.

In the case shown in Figure 2 the data capture module consists of a user's computer system 1 arranged under the control of a browser and an applet which is resident in each web page or frame that is to be monitored. Applets are small applications written in, for example, the Java and JavaScript programming languages which may be downloaded from a website into a user's browser in order to carry out a particular function. The applet used in the system shown in Figure 2 is currently named Prophet by the applicants and this name shall be used in the description to aid understanding.

It will be appreciated that a system such as that shown in Figure 2 can be used to monitor performance of a large number of websites provided at different servers which are connected to the Internet. However, again for the sake of simplicity in this case, a single website and the performance of the service supported by that website shall be considered.

Thus, in this case, a website is supported by a web server 3 which is accessible via the Internet 2. The website has been set up such that the Prophet applet is contained by each web page 101 which is to be monitored. This means that as a user visits a web page 101 the user's browser automatically downloads and executes the applet. Figure 2 schematically shows web pages 101 displayed in the user's browser and the Prophet applet 102 running within the page 101.

The user's communication unit 1 under the control of the Prophet applet monitors the user's interaction with the web page 101 and returns the information obtained to the central unit 4 which in Figure 2 is shown to comprise a central unit server 41. A customer can obtain information from the central unit server 41 concerning the performance of the website provided at the web server 3.

Each web page or each frame to be monitored must include a copy of the Prophet applet 102.

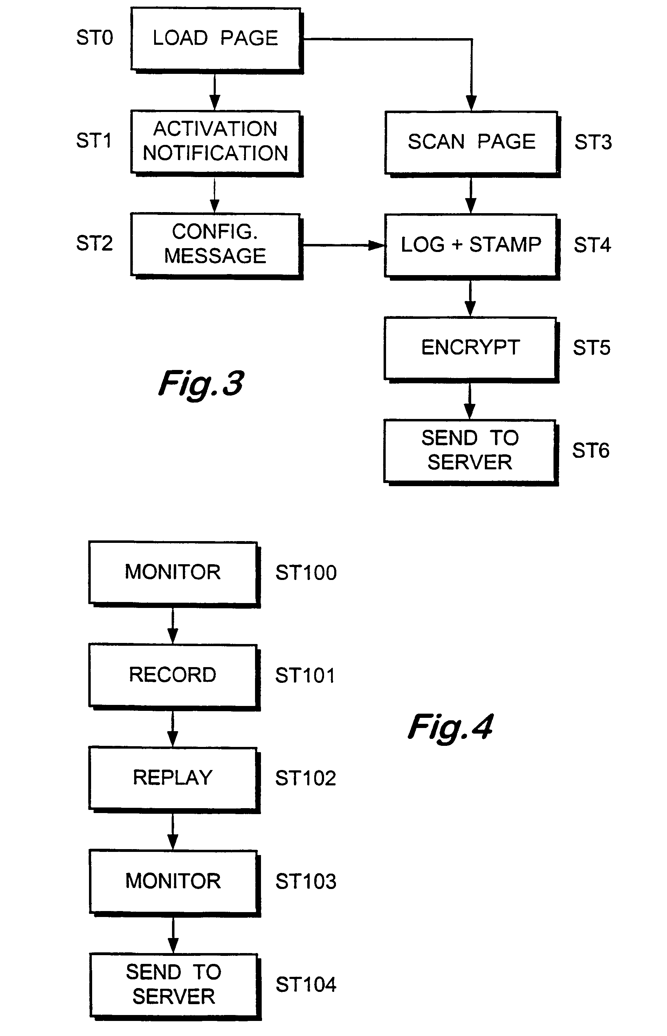

The Prophet applet 102 may be configured to perform a range of different monitoring tasks and to select different types of data. In practice a single version of the prophet applet is made available and included into the appropriate web pages by the author or maintainer of the pages. The configuration is achieved by a configuration message which is sent to the applet from the central unit server 41. Figure 3 is a flow chart schematically showing the steps carried out in monitoring activity associated with a web page in the system shown in Figure 2.

In step 0 a web page 101 and resident Prophet applet 102 is loaded into a user's browser. In step 1 as the applet is activated within the browser an activation notification signal is output under the control of the applet to the central unit server 41. The activation notification includes a trial session ID and a URL (uniform resource locator) indicating the location of that instance of the applet.

Each customer (each entity who includes the Prophet applet 102 on their web pages) is supplied with a registration key. This registration key is used to verify web page 101 and central server 41 match. The appropriate key is included in the applet in each page. A copy of the registration key is included in the activation notification. The central server 41 checks to see that a valid key has been received. If there is some mis-match this could indicate an incorrectly set up page or a hacking attempt. If any such mis-match is determined then any further data received from that instance of the applet is ignored by the central server 41.

The activation notification includes an indication of the instant at which the notification is generated in terms of time as kept by the communication unit 1 concerned. The Prophet applet 102 treats this instant as time zero and all later occurrences a logged relative to time zero. The time of this instant, in communication unit time, is received by the central server 41 and compared to a server universal time. The result of the comparison is used to apply an appropriate offset to subsequent timings received from the communications unit 1 such that all occurrences dealt with at the central server 41 are logged in server universal time.

Correct receipt of the activation notification by the central server 41 triggers issuance of a configuration message, at step 2, which is sent to the respective communications unit 1. The content of the configuration message is selected by the central unit server 41 on the basis of preselected information received by the server 41. In particular, the configuration will depend on the page being loaded into the browser and may also depend on other factors or information such as the URL supplied by the applet or name of the user, the time of day and/or other user or system information.

The configuration message either allows use of the trial session ID or, if the trial session ID is inappropriate, includes a replacement session ID. In either case from hereon, the appropriate session ID can be used to identify the origin of each occurrence which is monitored and sent to the central unit server 41. The session ID uniquely identifies the particular instance of browser being used and this allows occurrences relating to a single browser instance to be tied together easily. Further elements of identification may be used to allow the particular page being used to be identified so that occurrences relating to a single page can be tied together easily. The configuration message will typically also include details of the occurrences that should be monitored in respect of that page, these being controlled by the entity who is interested in the data. For example to undertake simple "user path analysis" only page load and unload events are needed. On the other hand, to undertake a detailed analysis of failure modes in a form it is necessary to collect information on mouse movements and keystrokes from the pages in question. In determining the occurrences to be specified in the configuration message, the central unit consults an internal table or process to determine what information the applet should collect from this URL at this time (as indicated above, the decision on what data to collect can be based on many factors (such as URL, time of day, previous activity, or a random or pseudo random process which will arrange for a specific proportion of pages to have data collected)).

It should be noted that this configuration process facilitates the use of a single common applet.

At the same time that the applet is signalling its existence in step 1, the contents of the page being loaded into the browser is scanned under control of the prophet applet 102 in step 3. The applet develops a page map which includes a list of all of the page components. This is used to allow the applet to quickly analyse any action taken by the user and prepare a record which correctly contextualises the action.

At step 4 a log of occurrences which occur in relation to the web page concerned is generated, each occurrence being given a time stamp relative to zero time. The occurrences logged in step 4 correspond to actions directly taken by the user as well as events occurring in the browser without the user's direct involvement.

A large range of different occurrences may be logged. As mentioned above the actual occurrences logged will depend on the contents of the configuration message received by the prophet applet. Below is a non-exhaustive list of the occurrences which may be monitored and logged:
Start of page load
Completion of page load
Completion of image or frame load
User input data finished
User input data started
User data (including details of key strokes, in terms of timing/speed of operation and/or actual keys pressed)
Hot Spot, and Hyper Link rollovers
Hyper Link selection
Mouse position
Field selections
Browser toolbar usage
Next URL selected
User editing of field information
User identification (log on name, device, IP address, etc)

In step 5 any sensitive information such as credit card details may replaced by non specific characters such as asterisks and all data is encrypted. Whether or not information is replaced by non-specific characters will depend on the configuration message supplied to the Prophet applet. In general terms a choice can be made and specified in the configuration as to whether details of characters input are retrieved in respect of any given page or frame. Thus for example, if a page or frame relates to credit card details, a non-specific keystroke option can be chosen which reports keystrokes but not the keys pressed. It can be noted that password fields are recognisable by the Prophet applet and thus the recovery of password characters can be treated differently from the remainder of a frame or page - i.e. password details would almost never be recovered.

At step 6, the information logged at step 4 and encrypted at step 5 is sent via the Internet 2 to the central server 41 for further processing and reporting as will be described in more detail below. In practice data may be allowed to build up to a predetermined level at the communications unit 1 before being sent to the central server 41. Steps 4 to 6 in Figure 3 will run and re-run continually whilst a page is active but it is not necessary for all three steps to be carried out for a given occurrence before processing of the next occurrence begins. An additional sending of data may be made as a page is left to ensure all data has been output.

The scanning operation which occurs in step 3 is described in more detail below. To help understand this operation some background is useful. As will be understood by anyone familiar with current "object oriented" software engineering techniques, all items or components within a web page are "objects".
Web pages are coded in HTML (Hyper Text Mark-up Language), this language is composed of "tags" each defining some aspect of the page (images to be displayed, hyperlinks to be associated with items on the page, text to be displayed and formatting commands (such as font, size, tables, colours etc.)). Each component of the page will consist of one or more objects.

When a user requests to view a page with a web browser, a web server or application Server will send the appropriate HTML tags to the user's browser. The browser will parse the inbound HTML and construct the page on the screen, at the same time it will construct an internal software table describing all the objects - this table is known as the browser's "Object Model".

The object model provides a mechanism for applets running within the browser to interact with the page, and for the browser to obtain information about and respond to the actions of the user.

Each action the user takes will generate "events" within the object model, for example as they roll their mouse over a picture, the object model will receive a "rollover event" directed to the object representing the picture, or as they click on a link they will generate a "click event" for the object representing the link. In this way every action of the user will result in one or more events within the object model.

In this application, in general terms, the prophet applet 102 selectively collects these events and returns them to the central server 41. In the scanning step 3 mentioned above, as a page is received, the prophet applet 102 scans the object tree to understand the structure of the page being displayed, the applet 102 then "registers" with the object model to receive the events it is configured to collect.

This scanning or parsing of the object model means that a single applet is capable of adapting to any page which is downloaded. This is by virtue of the fact that the applet automatically parses the object model for the page it finds itself in, and then registers for all required events from any objects within the object model which are capable of generating one of those events.

The fact that a single applet can deal with all pages can provide various advantages. One advantage is the fact that the system and method can become easy to implement. A common HTML applet insertion tag can be inserted into all pages to be monitored and the need to tailor applets to match the page that they are in can be avoided.

Another advantage is that the browser can cache the prophet applet 102. This means that once downloaded and stored in cache, any further pages needing the prophet applet 102 in this session can retrieve it from the cache.

The use of a generic applet is further facilitated by the activation notification and configuration methodology described above.

As has been discussed above, such a system allows data to be collected which gives an insight to user behaviour and user perceived performance in relation to particular web pages. This information can be used to help to improve the performance or effectiveness of services provided via web pages.

An alternative data capture module is implemented by use of a browser plug-in currently called Vigilante by the applicants which functions in a similar way to the prophet applet but is permanently resident in a user's browser. Thus, in a Vigilante based system, rather than the applet being downloaded onto a user's communication unit each time a web page is loaded, Vigilante is always present in the user's browser and thus can be used to monitor a user's interaction with any web pages visited. This can be achieved either by the Vigilante plug-in directly monitoring a user's activity or by it being arranged to load the prophet applet into each downloaded page. The Vigilante plug-in is typically included in the user's browser by the user or the user's system administrator. The Vigilante plug-in may be used for monitoring activity in a similar way to as the Prophet applet discussed above but also may be used for security purposes. For example, an Internet Service Provider may offer an incentive to its users to use Vigilante whilst logged on through their service or an employer may use it to monitor activities being carried out by his or her employees. Although the terms applet and plug-in are used herein to aid understanding, it should be noted that when used in its broad sense, the term applet encompasses plug-ins.

As a further alternative a dedicated browser may be provided in which the Vigilante or prophet functionality is incorporated. The dedicated browser may be used in substantially the same way as existing browsers such as Netscape Navigator and MS Internet Explorer, whilst at the same time providing the monitoring functions discussed above. The browser might be used by a user or a customer to monitor and/or control a user's activity. This may be useful for organisations to retain a certain level of control over staff's access to the intranet or Internet or at least monitor their activities. In such systems it may be preferable to provide a configuration signal from a local server or stored cookie rather than from the central unit server 41.

As a further alternative a proxy server could be provided with the ability to insert the prophet applet (or other client side adapter = CSA) into the web data being viewed (e.g. HTML). Thus the applet (client side adapter) will be inserted by the proxy into every page (dynamically) during the data's journey through the proxy server. In this way all browsers which access data through this proxy will have their interaction monitored, with data being sent back to the proxy server. The proxy may then forward this data on to another machine or may store it itself for later analysis.

Of course the proxy server may instruct the applets (CSAs) to only collect data in certain circumstances or indeed only insert the applet (CSA) under specific conditions.

This functionality would be useful in a corporate environment where the ability to monitor and control employee's internet use is desired. In this case the proxy in question would be a server or servers which serve data to employees. More specifically this machine may also act as the corporate firewall, it being the obvious choice for this technology as a firewall already controls data flow to the internet/intranet.

Further a web portal (or similar gateway service) may make use of this technique to monitor client behaviour on behalf of web service providers (e.g. corporate clients).

Data concerning network and server operation may also be monitored by the provision of suitable software. The exact method for monitoring such data will depend on the devices being monitored. However, the use of a configuration message and the use of server universal time is preferable. Further, the data extracted is preferably returned to a central unit for further processing.

In a further example, a server supported service testing and in particular a load testing tool is provided. The testing system uses the same general architecture as is shown in Figure 1. Figure 4 schematically shows the process used to test the server based system.

Initially one or more users is allowed to use a service supported by the server 3 which is to be tested, and whilst doing so their activity is monitored in step 100 using the prophet or Vigilante systems described above. This monitored activity is then recorded as a script in step 101. In step 102 one or more scripts recorded in step 101 are replayed by end user communication units 1. Typically a large number of scripts will be run on separate end user communications units 1 to simulate the effect of the service experiencing heavy usage. In step 103, as the scripts are replayed the performance of the service is monitored from the point of view of each user, ie at each end user communications unit 1.

The second monitoring step 103 is again substantially the same as that described above in relation to the Prophet applet and Figures 2 and 3. At step 104 the data gained in the monitoring step is sent to the central unit 4.

Suitable software for controlling the running of scripts and monitoring of behaviour is provided at each communications unit 1. Although this may be implemented in a number of different ways it will be most efficient to use applets or plug-ins substantially the same as the Prophet applet and Vigilante plug-in described in detail above. The software used to implement steps 102 to 104 shown in Figure 4 above is currently called Slayer by the applicants and this term will be used below to ease understanding. When Slayer is run on an end user communication unit 1 it announces its presence to the central unit server 41 and awaits further instructions. Further instructions are issued via the central server 41 typically under the control of a systems manager in charge of the server based service to be tested. The necessary user communications units 1 are activated, for example by a systems manager or an automated system, and caused to load a particular web page. Once this has been done interaction with web pages is governed by the recorded scripts which may be downloaded from the central server 41 to the user communication units 1 concerned.

It is to be noted that the scripts to be replayed by Slayer can, and preferably should be recordings of activities carried out by actual users. Thus recorded scripts are likely to include mistakes, incorrect entries, invalid transactions and perhaps arbitrary delays or hesitations. This can give a much more accurate representation of real world traffic.

However, although the scripts are typically recordings of real users and can be used to accurately re-create the actual steps taken, the scripts may be replayed at high speed and/or multiplied to give the effect of many users simultaneously attempting to use the same system. All factors concerning the rate at which data is entered and the time between each transaction etc. may be controlled by the system manager to give the desired test circumstances.

A further advantage of this system over one which relies on artificially generated test programs is that when web page designs are changed, scripts relating to the amended pages can be automatically generated as users use those new pages. If a Prophet or Vigilante based system is being used in relation to the pages concerned there will be a ready made source for recorded scripts. The need for manually re-generating scripts for each version of the site can therefore be avoided.

In some circumstances it may be appropriate and preferable to edit the recorded scripts before they are replayed by Slayer. For example, this might be necessary to prevent real purchasing transactions occurring during replay.

The following are examples of browser events which may occur as the user interacts with a page. In each case these events may be associated with scripts. This means that such events may be monitored using the Prophet or Vigilante system mentioned above and also may be re-run using the Slayer system.
Load:- occurs when all the content of a particular document has been loaded within a page.
Unload:- occurs when a document is removed from a window or frame.
Abort:- occurs when page loading is stopped before an image has been allowed to completely load.
Error:- occurs when an image does not load properly or when an error occurs during script execution.
Select:- occurs when a user selects some text in the text field.
Focus:- occurs when an element receives focus via a pointing device or tab navigation.
Change:- occurs when part of a page such as an input region or a text area loses focus and its content has been changed since gaining focus.
Submit:- occurs when a form is submitted.
Reset:- occurs when a form is reset.
Blur:- occurs when an element loses focus.
Resize:- occurs when a document view is resized. Scroll:- occurs when a document view is scrolled.

The arrangement of the present example gives advantages in that aggregate computing power of a large number of end user communication units may be used in the gathering of data and or the running of scripts to provide a load testing function. This limits the amount of processing power required at the central server 41 and facilitates the gathering of information which is specific to individual end users. To maximise the advantage of this distributed processing effect the format of the data sent to the central server 41 should be such that as little processing as possible is required on the data received at the server.

Although the system is such that data can only be gathered in relation to pages in which the applet is active, it is possible to gain information about what happens to cause the page to be exited. Typically this may be movement to another page or website. The applet may monitor and log the identity of the next site to be visited and also the event which caused such a move, for example a mouse click on a hypertext link or the direct entry of a URL.

In some circumstances it may be necessary for the applet to be signed using a signature technique which is applicable across all compatible browsers. The authority granted by the certificate should be sufficient to accomplish tasks required for monitoring and logging data. Thus the certificate is preferably sufficient to allow access to all entities within the HTML frame, to obtain access to sub-windows opened by the browser or any contained scripts, and optionally to access the browser buttons and menu activity. If a signed applet is received by an end user communication unit 1 this version of the applet may be retained by the end user communication unit and used for subsequent pages.

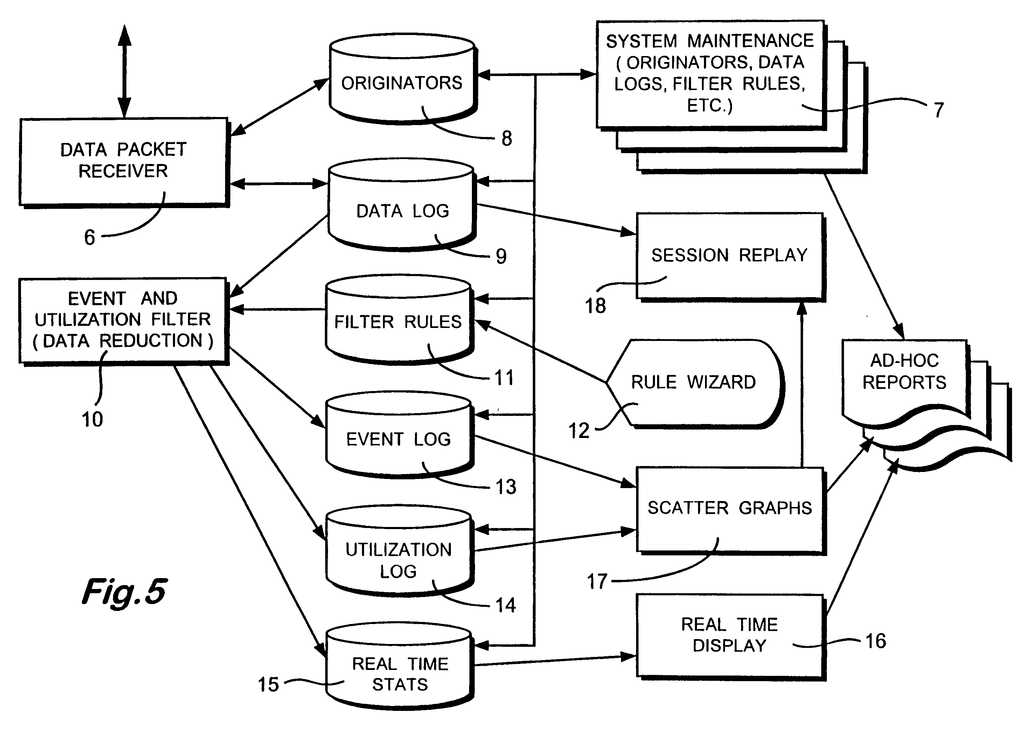

Figure 5 schematically shows the internal architecture of the central unit (or database) server 41 supported by the central unit 4. The database server comprises a data packet receiver/generator 6 which is arranged to output and receive data to and from any data capture module. The data packet receiver/generator 6 facilitates communications between the data capture modules and the database server 41. Amongst other functions, the data packet receiver/generator 6 receives activation notices from data capture modules and returns configuration messages.

The database server 41 further comprises a system maintenance module 7 which provides tools and mechanisms for defining configuration rules for the different versions of data capture modules which are in existence. In relation to the Prophet applet this allows the generation of configuration settings for use with the different instances of the Prophet applet which have been included in web pages by customers.

The tools provided by the systems maintenance module 7 also allow systems managers to populate and manage an originator's database 8 which holds configuration data for all known data capture modules, i.e. all known versions of the Prophet applet amongst other things. The originator's database 8 constructs and issues configuration messages based on the activation notifications which it receives from remote data capture modules via the data packet receiver 6.

The system maintenance module 7 also provides configuration and maintenance tools for the other functions of the database server 41 described below.

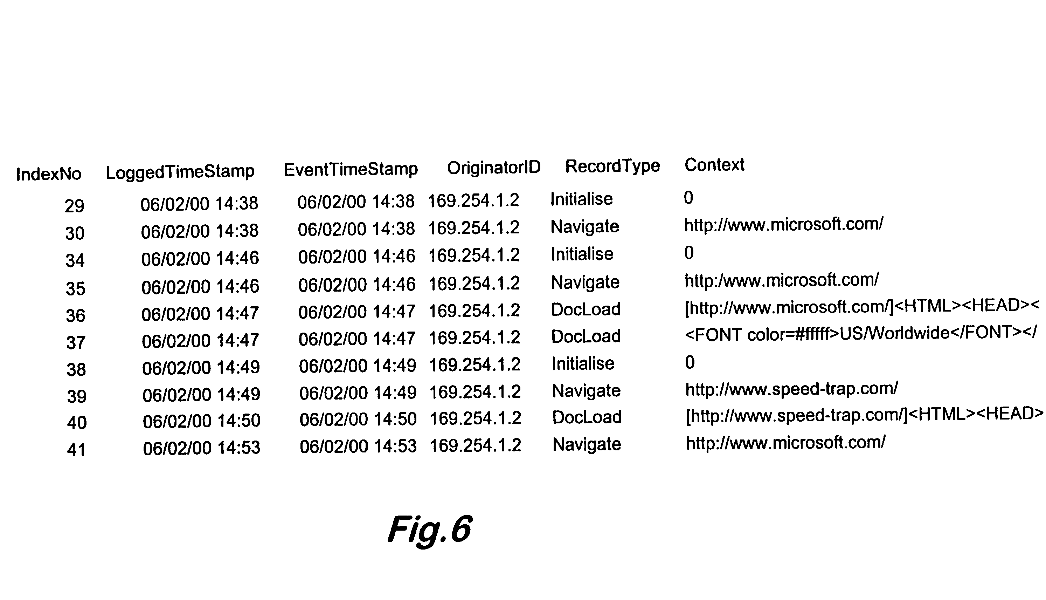

The database server 41 includes a data log 9 which holds all the data collected from the data capture modules. Each entry in the data log includes details of the occurrence and a time stamp indicating when the occurrence was lodged in the data capture module. The data log 9 also adds a time stamp indicating the time at which it logged the occurrence. Figure 6 shows an example of the data stored in the data log 9.

As well as data from user browser based data capture modules, the data log 9 also logs utilisation data from data capture modules provided in the network 2 and at servers. Utilisation data will include statistics such as server CPU (central processing unit)utilisation, memory utilisation and network bandwidth usage. Thus this information is of a more generic data than that obtained directly from a user's browser.

The database server 41 further comprises a standard event and utilisation filter module 10 which is used to process the data stored in the data log 9 in order to reduce its volume and present it in a more usable fashion. The standard event and utilisation filter module 10 uses filter rules stored in a filter rule database 11.

A rule wizard system 12 is provided to allow a systems manager to generate filter rules. A filter rule is used to define standard events which are characterised by a sequence of one or more occurrences taking place in a given sequence within a single browsing session.

As described above, an occurrence is constituted by any action carried out by the user or any event within the browser however minor. A collection of data concerning such occurrences is not always useful. The generation of filter rules defining standard events allows the data to be put in a much more usable and compact form. The rules wizard system 12 allows a newly generated filter rule to be tested against a portion of the data stored in the data log 9 to test its function. Once a rule has been tested it can be stored in the filter rule database 11.

Each filter rule can have active or inactive status. This means that not all rules which have been generated must be applied to all incoming data. All data stored in the data log 9 is parsed by all active rules specified in the standard event and utilisation filter module 10.

Each filter rule assigns a name to each standard event and may also specify one or more associated value, such as an elapsed time, an absolute time, or other data to be retrieved from the specific occurrences making up the standard event.

The standard event and utilisation filter module 10 holds a state table for each rule in an active browsing session. Whenever the rule state table signifies that a standard event has occurred, a corresponding event record is written into a standard event log 13. The standard event record includes a time stamp taken from the final occurrence which triggered the standard event creation. Moreover, any additional data specified by the rule will be inserted into the standard event record.

Rules may also be defined using the rule wizard system 12 to identify utilisation events. A state table is held in the standard event and utilisation filter module 10 for each utilisation event rule. Whenever the utilisation event rule state table signifies that a utilisation event has occurred, a utilisation event record is written into a utilisation log 14. In alternatives a rules wizard may not be included but rather rules may be generated and programmed manually.

The standard event and utilisation filter module 10 also has the function of calculating real time statistical information which it stores in a real time statistics database 15.

Data from the real time statistics database 15 is fed to a real time display module 16 which displays real time statistical data on the performance of websites which are being monitored. The type of information which is provided by the real time display module 16 is high level and thus, for example, might include number of sales per second.

A graph generation module 17 is provided to generate graphs from the data stored in the standard event and utilisation log 13,14. These graphs may be made available via suitable web pages and can represent historic or near real time information. A graph may for example show data concerning the different times taken to load a given page on a web site. The system includes a facility such that by appropriately selecting points on a graph, the detailed standard event record may be viewed for that or those points. Furthermore, it is possible to display all occurrences which resulted in that standard event.

Tools provided in the systems maintenance module 7 as well as the functionality of the real time display module 16 and graph generating module 17 allow the production of ad hoc reports by customers who are having their web sites monitored. Although Figure 5 shows the generation of graphs and ad-hoc reports from filtered data, it should be noted that raw data from the data log 9 can also be used in the generation of graphs, ad-hoc reports and in any other ways desired by a customer.

It is not essential for customers to gain performance information directly from the central unit 4. Reports may be generated by the administrators of the monitoring system and provided to customers. Such reports may, for example, be in the form of hard copy or sent electronically.

The database server also includes a session replay module 18 which allows the replay of any session stored in the data log 9. Thus the functionality of the session replay module 18 is similar to, but distinct from, that supplied by the Slayer system described above. The session replay module 18 functions by retrieving all the HTML code stored in the data log 9 and optionally loading any unstored data such as images from the Internet. The module 18 then replays the actions taken by the user. This module gives the ability to review the actions carried out by a particular user which may be useful in identifying a problem which occurred either to assist the user in overcoming the problem or to highlight an aspect of the web page or web site which may be improved. It will be understood that here the replay of actions taken by the user manifests itself as what might be termed a "virtual video" of the user interactions with a web page or series of web pages. This "video" may be run at original recorded speed, or may be run faster or slower as desired. That is to say fast forward and slow motion functionality can be used. Individual portions may be stepped through and/or replayed as often as required. The replay module may replay the activities of a whole session by redisplaying the pages originally visited, and user interaction therewith, through a browser which is similar to that through which the pages were originally viewed by the user. Alternatively a dedicated form of browser, which is arranged particularly for use in replay may be provided.

The systems described above are capable of providing information concerning uses of web sites which is extremely detailed. For example it is possible to provide real time displays and or reports showing the following amongst other things:
Number of visitors per unit time,
Number of new customers,
Number of customers who ordered,
Number of customers by location,
Number of visitors who tried and failed to order, Total website orders,
Total website order value,
Website navigation,
Usability of website,
Apparent speed per customer,
Typical route through site,
Page hot spots,
Time to complete a standard event,
Events by time of day,
Average and maximum/minimum time to complete transaction,
Page load time by page by time of day,
Time from loading to exit of page,
Exit route from page,
Name of user by time of day,
IP address of user by time of day.

It is envisaged that such and other data will enable organisations running websites to optimise their services. In particular it is envisaged that it may be possible to reduce cost of providing the service, maximise revenue/transaction rate, highlight and investigate failure modes, understand usability of site, detect unsatisfactory service, detect and correct site design issues, undertake detailed analysis of user behaviour, evaluate success of investments in technology, target IT investment strategies for e-commerce applications.

The following gives an example of the kind of advantages which using a system of the current application can give.

A website owner may be experiencing a large number of incomplete transactions and also retrieving complaints of poor performance from their customer research. By including the Prophet applet on each relevant page of their website and configuring the system to retrieve time of day information on the entry and exit from each page as well as recording the exit routes from each page the following type of information may be gained. For example the time taken by users to complete some key pages may be identified. For example it may be determined that whilst 50% of users complete a page in less than 20 seconds nearly 20% take more than 2 minutes, whilst 20% never complete the transaction. By more careful analysis of the data it may become apparent that a large proportion of the slow users are using the same Internet service provider and this can indicate that there are problems using this Internet server provider. However, there may be some other reason whilst the other users are having difficulty. It might, for example, be established that a high proportion of users are having to access the help page more than twice whilst attempting to complete the transaction. This could point to a problem in the page design. Moreover, it might be established that a significant proportion of customers begin to fill out a user registration form but fail to complete it.
This could suggest that the registration form is too long or too complex. It might alternatively be found that a large number of users leave the site via a banner advert provided on one of the pages. It may then be concluded that the positioning of the advert is disadvantageous.

As another example, it is highlighted that cursor/mouse position within a page can be monitored. This can be used to generate statistical data on cursor position. This in turn can assist in page design, it might for example, be established that a majority of users seem to be attempting to find the "submit" button in the bottom right hand corner of a page even though the button is located elsewhere.

In the above description the web or application server 3 is shown to be distinct from the central unit (or database) server 41 and mention is made of the central unit server 41 collecting data from a number of different web servers 3. Whilst this arrangement is possible, in practice it is currently preferred that a separate central unit server runs along side each webserver that supports services which are to be monitored so that a particular central unit server collects the data relating to its respective webserver. Having the servers 3, 41 at the same location allows the use of unsigned applets.

In general terms it will be appreciated how the information provided by systems described in the present application can be of great assistance in improving website design.

From the above it will be realised that the systems, methods and apparatus of the present application may be used for purposes including, but also other than, monitoring the performance of services. In general a facility for extracting data concerning the interaction of users with services is provided. This extracted data may be put to a number of different uses. Some specific features of the system (client side and server side) and uses to which it may be put are detailed below.

The basic applets provided are generic and have the ability to trap and report events in respect of all objects within a page. Thus even if a page changes the applet will continue to function. The applet may be set up to track events which relate to specific objects within the page.

True web enabled replay is possible based on the information gathered at the server. This can include activities of other applets active within the page. It is also possible to generate site maps from the data retrieved showing the paths followed by actual users through a site being monitored. This can be compared to original site design documents. A "most used path" can be determined.

In the methods and systems described above, the applet instance in any given page may be configured upon receipt of a configuration message to monitor and report on selected occurrences. In an extension to the above systems and methods, applets which have heightened processing capabilities, currently called "smart applets" by the applicants may be provided. Such smart applets are arranged so that, once appropriately configured, they can undertake processing before returning information to the central unit server. In this way the smart applet may be configured to watch for a particular sequence of events before responding to the server. Optionally, the smart applet may be arranged and configured to supply a message indicating that the specific sequence (or one of a number of specific sequences) has occurred instead of, or as well as, the information monitored itself.

This might be is implemented as follows:
1. The smart applet is written to allow configuration such that it waits for a set of events to occur (perhaps in sequence) before acting. There may also be timing information associated with the sequence.
2. The smart applet is inserted in pages to be monitored, is downloaded into a user's browser and contacts the central unit for configuration information in a way substantially the same as that described above for the prophet applet.
3. At the central unit, a sequence of events to be looked for is specified (based on, for example URL, time, previous activity or other significant events)
4. The central unit sends its configuration message to the smart applet indicating the sequence of events which should trigger a response and supplies an "trigger event name" which the smart applet should return if the required sequence occurs.
5. If and when this sequence of events occurs, the smart applet sends the central unit a message indicating that the sequence has occurred using the trigger event name. The smart applet may also return other information about the user's interaction.

A possible sequence of events to be looked for by a smart applet might be:
a. A 5 second delay after page loading
b. A click on one of three specified buttons
c. More than one roll-over event occurring within a specified location on the page within 3 seconds of the button push
d. And then a further rollover event of a given object.

The use of smart applets can give various benefits. The amount of communication between the server (central unit) and client (browser) is reduced, as only "significant" events are passed back to the server. Further, the processing load on the server is reduced, as the client's machine undertakes the searching for significant sequences, and because the number of received messages is reduced.

Moreover, smart applets can provide selected real time notification of activity within a page, without the user pressing "submit" (for example during the completion of web-forms). This facilitates the webserver proactively sending additional pages or content to assist the user, or to modify future content.

A further advantage is that a smart applet can be used as a mechanism to automate web pages without the need for the writing of Javascript - thus simplifying the building of interactive pages.

The concept of a session ID which identifies a particular browser instance is introduced above. More detail of the session ID assignment mechanism and the advantages given by session IDs in the methods and systems of the present application is given below.

It will be appreciated that the present application relates largely to client side monitoring. Performing this client side monitoring together with the use of a session ID, which effectively identifies a client during their interaction with one or more websites, leads to a powerful user activity monitoring mechanism. In short, it allows simple understanding of the paths and actions taken by a single user. This information cannot be gathered directly from a web server because these do not retain any concept of "session" or "user", rather they are "stateless" servers of pages, which pages are sent in response to http requests.

The session ID assigning process for prophet applets mentioned above may be carried out as follows.
1. All applets are dispatched from the central unit server with a central unit server ID attached. This ID is derived from the electronic software license (issued by speed-trap) installed in the central unit server.
2. When a prophet applet is initialised the applet will look in the browser's memory for a memory cookie with a name which matches the server ID embedded in the applet.
3. If it finds a cookie with the correct server ID it will read the session ID contained within the cookie, and will issue an activation notification to announce its initialisation and collect its configuration message. It will pass this session ID (and its server ID) to the central unit server, and mark all events it collects with this session ID.
4. If the applet does not find a memory cookie with the right server ID then it will contact the central unit server to collect its configuration and time of day information as before, but it will pass a session ID of -1. In response to the receipt of an activation notification with a session ID of -1, the central unit server will provide a suitable session ID from a range allocated to that server. On receipt of this session ID the applet will make a browser memory cookie with the correct server ID and embed the supplied session ID in it. In this way all future applets loaded from this central unit server in this session will acquire the same session ID.

This is the normal operation of the central unit server and prophet applet initialisation mechanism. In alternatives, this mechanism may be extended to allow a single session to extend across multiple central unit servers. This is a particularly important facility when it is remembered that, for practical reasons, it is currently preferred that a separate central unit server is provided at each webserver for receiving monitoring information relevant to the services supported by that webserver.

In such an implementation extending a single session across multiple central unit servers allows an enterprise or collection of enterprises to consolidate Prophet data from a community of several webservers. These may exist within a single site and Domain, or may be spread across many locations and web sites. Extending a single session is achieved by arranging to issue licenses that contain the same "server ID" to each central unit server in the community.

Thus any applet loaded from a central unit server in this group will use a browser cookie with a common server ID and the session ID will be propagated across all the servers in the community. When the data from several servers is consolidated, this common session ID will allow sessions which cross multiple servers, sites or applications to be viewed, or analysed as an integrated whole.

A particular set of data that may be collected and sent to the central unit during the monitoring operation of applets in systems and methods of the present application is the HTML code received by the browser, either in whole or in part.

When configured to collect HTML, the applet will attempt to retrieve the HTML source as received at the browser from the web server. However, not all browsers allow this to happen and an alternate mechanism might be to install a proxy between the web server and the browser, and arrange for this proxy to retrieve the HTML. This has an advantage that it would catch all delivered HTML, but also the disadvantage that it may not be an accurate reflection of the HTML as received by the browser, and does not provide a guarantee that the HTML was received at the browser

When the HTML is retrieved, the applet (or proxy) calculates a checksum from the HTML of the page to provide an indication of the content of the page. The applet then returns this checksum to the central unit server with the URL of the page. The central unit server then checks to see if it already has a page with the URL and checksum reported by the applet in its page cache.

If such a page is not in the cache, then the central unit server requests the page HTML from the applet. Whereas, if a matching page HTML is in the cache the applet is not requested to return a copy.

In this way the central unit server can collate a complete set of all transmitted pages, and a record of delivery of each complete (unchanged) page to the applet.

This mechanism allows the central unit server to determine a number of things:
If the page was delivered;
If the page was changed in transit, for example if it was corrupted or interfered with deliberately (Hijacked);
If the page was generated in accordance with the intent of the page designer. This is of particular interest to application designers who build sites using programmatically generated dynamic pages. In such cases the applet HTML source recovery may be the only mechanism available for checking that the pages were correctly generated.

## Claims

1. A method for monitoring operation of a service provided over a network (2) to a plurality of communications units (1), the method comprising the step of receiving at a central unit (4), information obtained at each communication unit under the control of respective applets (102) running within browsers during monitoring of activity associated with the service,
**characterised in that**
the method comprises, before the information receiving step, the further steps of:
receiving, at the central unit (4), activation notifications from active applets (102); and
outputting, from the central unit, respective configuration messages to each communications unit (1) from which activation notification has been received, which messages are arranged to configure the respective applets so as to control the information sent to the central unit.

2. A method according to claim 1 in which the information obtained comprises details of a user's interaction with an electronic page, such as a web page, accessed when using the service.

3. A method according to claim 2 in which said details include a log of pointing device position and selecting operation.

4. A method according to any of claims 1 to 3 comprising the further step of analysing the data received at the central unit.

5. A method according to Claim 4 in which the analysing step comprises filtering the data so that it can be presented in a more convenient form.

6. A method according to Claim 5 comprising the step of specifying at least one filter rule for use in the filter process.

7. A method according to claim 6 in which the at least one filter rule defines a standard event which comprises a predetermined set of occurrences.

8. A method according to any preceding claim in which a universal time reference source is provided at the central unit and the method comprises the step of time stamping received data in terms of universal time.

9. A method according to any one of claims 1 to 8 wherein, the central unit comprises a page cache including some of the source or the full source for pages and corresponding checksums and the method comprises the further steps of, receiving, from a communications unit, a checksum calculated from the source of a page of interest originally delivered to the communications unit as part of the service, comparing the received checksum with those stored in the page cache and requesting the communications unit to send the all available source for the page of interest if no checksum match is found in the comparing step.

10. A method according to any one of claims 1 to 9 wherein, sessions between the central unit and respective communications units are created and the method comprises the further step of supplying respective session identifiers to respective end user communications units at the beginning of each session, in response to receipt of activation notification from the respective communications units.

11. A method according to claim 10 wherein there are a plurality of central units each arranged for receiving information obtained at respective communication units during monitoring of activity associated with respective services.

12. A method according to claim 11 in which sessions between respective communications apparatus and the plurality of central units are created and assigned session identifiers, such that activity associated with a plurality of separate services may be monitored in one session and associated with a common session identifier.

13. A method according to claim 12 comprising the step of one of the central units in the plurality supplying the session identifier to a respective end user communications unit at the beginning of the session, in response to receipt of activation notification from the communications unit.

14. A method for monitoring operation of services provided over a network to a plurality of end user communications units (1), the method comprising, at each end user communications unit (1), under control of an applet (102) running within a browser, the steps of:
monitoring activity associated with a service;
transmitting information obtained in the monitoring step to a central unit (4); and **characterized in that** the method comprises, in addition, before the above steps, the further steps of outputting an activation notification from the communications unit (1) to the central unit (4); and
receiving a configuration message from the central unit (4) in response to the activation notification, which message is arranged to configure the applet (102) so as to control the information sent to the central unit (4) .

15. A method according to claim 14 wherein the service is accessed via at least one web, or other electronic, page and the method comprises the further step of identifying the interactive content of a page as the page is visited and loaded into the communications unit.

16. A method according to claim 15 in which the step of identifying the interactive content includes determining information concerning the relevance and/or context of the interactive content.

17. A method according to claim 15 or claim 16 wherein at least some of the information gained in the identifying step is included in the information output by the communications device.

18. A method according to claim 17 in which the step of identifying the interactive content includes determining information concerning the relevance and/or context of the interactive content and the method includes the further step of associating this contextual information with information concerning monitored activities.

19. A method according to any one of claims 14 to 18 in which the step of monitoring activity comprises monitoring pointing device position and/or selecting operation.

20. A method according to any one of claims 14 to 19 in which the applet runs within a browser and runs in a language which is cross-platform.

21. A method according to Claim 20 in which the applet is non-persistent.

22. A method according to any one of claims 14 to 21 in which the monitoring step comprises monitoring for a predetermined sequence of occurrences associated with a service provided over the network and the outputting step comprises outputting information over the network to a central unit when the predetermined sequence of occurrences is detected.

23. A method according to claim 22 wherein the predetermined sequence of occurrences is operator definable.

24. A method according to claim 22 or claim 23 in which the information comprises a message indicating the detection of the predetermined sequence.

25. A method according to any one of claims 22 to 24 in which the information comprises data concerning the occurrences themselves.

26. A method according to any one of claims 14 to 25 wherein the information sent to the central unit relates to at least some of the source, such as HTML, originally received by the communications unit in relation to the service.

27. A method according to claim 26 in which the information comprises all of the source for a selected page of interest.

28. A method according to claim 26 wherein the information sent to the central unit comprises a checksum calculated on the basis of at least some of the source, such as HTML, originally received by the communications unit in relation to the service.

29. A method according to claim 28 in which the checksum is calculated on all of the available source for a selected page of interest.

30. An end user communications unit (1) for use in a system for monitoring operation of services provided over a network (2), the communications unit (1) being arranged to allow reception of services provided over the network, and being arranged, under control of an applet (102) running within a browser, to monitor activity associated with a service provided over the network and to output information so obtained to a central unit (4), the end user communications unit being **characterised in that** it further comprises:
means for outputting an activation notification from the communications unit (1) to the central unit (4); and
means for receiving a configuration message from the central unit in response to the activation notification, which message is arranged to configure the applet (102) so as to control the information sent to the central unit.

31. A communications unit according to claim 30, wherein the service is accessed via at least one web, or other electronic, page and the communications unit is arranged for identifying the interactive content of a page as the page is visited and loaded into the communications unit

32. A communications unit according to claim 31 in which identifying the interactive content includes determining information concerning the relevance and/or context of the interactive content.

33. A communications unit according to claim 31 or claim 32 which is arranged to include at least some of the information gained in the identifying step in the information output by the communications device.

34. A communications unit according to claim 31 in which identifying the interactive content includes determining information concerning the relevance and/or context of the interactive content and the communications unit arranged for associating this contextual information with information concerning monitored activities.

35. A computer program comprising code portions which when loaded and run on computer means cause the computer means to execute the method of any one of claims 1 to 29.

## Patentansprüche

1. Verfahren zur Überwachung der Operation eines über ein Netzwerk (2) einer Mehrzahl von Kommunikationseinheiten (1) zur Verfügung gestellten Dienstes, wobei das Verfahren den Schritt umfasst, bei dem an einer Zentraleinheit (4) informationen empfangen werden, welche an jeder Kommunikationseinheit unter der Steuerung jeweiliger Applets (102) gewonnen werden, wobei die Applets während einer Überwachung von mit dem Dienst verbundenen Aktivitäten in Browsern ablaufen,
**dadurch gekennzeichnet,**
**dass** das Verfahren vor dem Schritt, bei dem Informationen empfangen werden, zusätzlich die folgenden Schritte umfasst:
- Empfangen von Aktivierungsmitteilungen von aktiven Applets (102) durch die Zentraleinheit (4); und
- Ausgeben von jeweiligen Konfigurationsmittellungen von der Zentraleinheit an jede Kommunikationseinheit (1), von der eine Aktivierungsmitteilung empfangen wurde, wobei die Mitteilungen so ausgelegt sind, dass eine Konfiguration der jeweiligen Applets zur Steuerung der an die Zentraleinheit gesandten Informationen erfolgt.

2. Verfahren nach Anspruch 1, wobei die empfangenen informationen Einzelheiten über die Interaktion eines Benutzers mit einer elektronischen Seite, etwa einer Website, enthalten, auf die während der Benutzung des Dienstes zugegriffen wurde.

3. Verfahren nach Anspruch 2, wobei die Einzelheiten ein Protokoll der Zeigegerätposition und Auswahloperation enthalten.

4. Verfahren nach einem der Ansprüche 1 bis 3, enthaltend einen weiteren Schritt, in dem die an der Zentraleinheit empfangenen Daten analysiert werden.

5. Verfahren nach Anspruch 4, wobei der Analyseschritt ein Filtern der Daten in einer Weise umfasst, dass die Daten in einer geeigneteren Form dargestellt werden können.

6. Verfahren nach Anspruch 5, enthaltend einen Schritt, in dem wenigstens eine Filterregel zum Einsatz im Filterprozess spezifiziert wird.

7. Verfahren nach Anspruch 6, wobei die wenigstens eine Filterregel ein Standardereignis definiert, das einen festgelegten Satz von Vorkommnissen umfasst.

8. Verfahren nach einem der vorhergehenden Ansprüche, wobei an der Zentraleinheit eine Universalzeit-Referenzquelle vorhanden ist und das Verfahren einen Schritt umfasst, in dem ein Zeitstempeln der empfangenen Daten bezüglich der Universatzeit erfolgt.

9. Verfahren nach einem der Ansprüche 1 bis 8, wobei die Zentraleinheit einen Seiten-Cachespeicher umfasst, der einen Teil der Quelle oder die gesamte Quelle für Seiten sowie entsprechende Prüfsummen enthält, und wobei das Verfahren die folgenden weiteren Schritte umfasst: Empfangen einer von einer Kommunikationseinheit kommenden Prüfsumme, die aus der Quelle einer interessierenden, ursprünglich an die Kommunikationseinheiten als Teil des Dienstes gelieferten Seite berechnet wurde, Vergleichen der empfangenen Prüfsumme mit den in dem Seiten-Cachespeicher gespeicherten Prüfsummen und Anfordern eines Sendens der gesamten zur Verfügung stehenden Quelle für die interessierende Seite von der Kommunikationseinheit, sofern für die Prüfsumme im Vergleichsschritt keine übereinstimmende Prüfsumme gefunden wurde.

10. Verfahren nach einem der Ansprüche 1 bis 9, wobei Sessions der Zentraleinheit mit jeweiligen Kommunikationseinheiten erzeugt werden und das Verfahren weiterhin einen Schritt umfasst, in dem in Abhängigkeit von dem Empfang einer Aktivierungsmitteilung von den jeweiligen Kommunikationseinheiten zu Beginn einer jeden Session jeweilige Session-Identifikatoren an jeweilige Endbenutzer-Kommunikationseinheiten geliefert werden.

11. Verfahren nach Anspruch 10, wobei mehrere Zentraleinheiten jeweils so ausgelegt sind, dass sie Informationen empfangen, die an jeweiligen Kommunikationseinheiten während der Überwachung der mit den entsprechenden Diensten verbundenen Aktivität gewonnen wurden.

12. Verfahren nach Anspruch 11, wobei Sessions jeweiliger Kommunikationsvorrichtungen mit den mehreren Zentraleinheiten erzeugt werden und diesen Sessions Session-Identifikatoren derart zugeordnet werden, dass mit einer Vielzahl einzelner Dienste verbundene Aktivitäten in einer Session überwacht und einem gemeinsamen Session-Identifikator zugewiesen werden können.

13. Verfahren nach Anspruch 12, enthaltend einen Schritt, in dem eine der mehreren Zentraleinheiten zu Beginn der Session den Session-Identifikator in Abhängigkeit vom Empfang einer Aktivierungsmitteilung von einer Endbenutzer-Kommunikationseinheit an die entsprechende Kammunikationseinheit liefert.

14. Verfahren zur Überwachung des Ablaufs von Diensten, die über ein Netzwerk mehreren Endbenutzer-Kommunikationseinheiten (1) zur Verfügung gestellt werden, wobei das Verfahren für jede EndbenutzerKommunikationseinheit (1) unter der Steuerung eines in einem Browser ablaufenden Applets (102) die folgenden Schritte umfasst:
Überwachen von mit einem Dienst verbundenen Aktivitäten;
Übertragen von Informationen, die während des Überwachungssehritts gewonnen wurden, an eine Zentraleinheit (4);
**dadurch gekennzeichnet, dass** das Verfahren zusätzlich vor den genannten Schritten die folgenden weiteren Schritte umfasst: Ausgeben einer Aktivierungsmitteilung von der Kommunikationseinheit (1) an die Zentraleinheit (4); und Empfangen einer von der Zentraleinheit (4) kommenden Konfigurationsmitteilung in Abhängigkeit von der Aktivierungsmitteilung, wobei diese Konfigurationsmitteilung so ausgelegt ist, dass das Applet (102) zur Steuerung der an die Zentraleinheit (4) gesandten Informationen konfiguriert wird.

15. Verfahren nach Anspruch 14, wobei über wenigstens eine Website oder eine andere elektronische Seite auf den Dienst zugegriffen wird und das Verfahren einen weiteren Schritt umfasst, in dem der interaktive Gehalt einer Seite identifiziert wird, während die Seite besucht und in die Kommunikationseinheit geladen wird.

16. Verfahren nach Anspruch 15, wobei der Schritt der identifizierung des interaktiven Gehalts die Bestimmung von Informationen umfasst, welche die Relevanz und/oder den Kontext des interaktiven Gehalts betreffen.

17. Verfahren nach Anspruch 15 oder Anspruch 16, wobei wenigstens einige der im Identifikationsschritt gewonnenen Informationen in der Informationsausgabe durch die Kommunikationsvorrichtung enthalten sind.

18. Verfahren nach Anspruch 17, wobei der Schritt der Identifizierung des interaktiven Gehalts die Bestimmung von Informationen umfasst, welche die Relevanz und/oder den Kontext des interaktiven Gehalts betreffen, und wobei das Verfahren einen weiteren Schritt enthält, in dem diese kontextbezogenen Informationen mit Informationen über die überwachten Dienste in eine Beziehung gebracht werden.

19. Verfahren nach einem der Ansprüche 14 bis 18, wobei der Schritt der Aktivitätsüberwachung eine Überwachung der Position der Zeigevorrichtung und/oder der Auswahloperation beinhaltet.

20. Verfahren nach einem der Ansprüche 14 bis 19, wobei das Applet in einem Browser und in einer plattformübergreifenden Sprache abläuft.

21. Verfahren nach Anspruch 20, wobei das Applet nicht dauerhaft ist.

22. Verfahren nach einem der Ansprüche 14 bis 21, wobei der Überwachungsschritt eine Überwachung für eine bestimmte Abfolge von Vorkommnissen beinhaltet, welche mit einem über das Netzwerk zur Verfügung gestellten Dienst in Verbindung stehen, und wobei der Ausgabeschritt die Ausgabe von Informationen über das Netzwerk an eine Zentraleinheit beinhaltet, wenn die festgelegte Abfolge von Vorkommnissen ermittelt wurde.

23. Verfahren nach Anspruch 22, wobei die festgelegte Abfolge von Vorkommnissen durch den Bediener definiert werden kann.

24. Verfahren nach Anspruch 22 oder Anspruch 23, wobei die Information eine Mitteilung umfasst, die das Erfassen der festgelegten Abfolge anzeigt.

25. Verfahren nach einem der Ansprüche 22 bis 24, wobei die Informationen Daten zu den Vorkommnissen selbst umfassen.

26. Verfahren nach einem der Ansprüche 14 bis 25, wobei die an die Zentraleinheit gesandten Informationen sich auf wenigstens eine Quelle, etwa HTML, beziehen, die ursprünglich von der Kommunikationseinheit in Verbindung mit dem Dienst empfangen wurde.

27. Verfahren nach Anspruch 26, wobei die Informationen die gesamte Quelle einer gewählten interessierenden Seite umfassen.

28. Verfahren nach Anspruch 26, wobei die an die Zentraleinheit gesandten Informationen eine Prüfsumme umfassen, die auf der Grundlage wenigstens eines Teils der ursprünglich durch die Kommunikationseinheiten in Verbindung mit dem Dienst empfangenen Quelle, etwa HTML, berechnet wird.

29. Verfahren nach Anspruch 28, wobei die Prüfsumme für die gesamte für eine gewählte, interessierende Seite erhältlichen Quelle berechnet wird.

30. Endbenutzerkommunikationseinheit (1) zum Einsatz in einem System zur Überwachung der Operation von Diensten, die über ein Netzwerk (2) zur Verfügung gestellt werden, wobei die Kommunikationseinheit (1) so ausgelegt ist, dass sie Dienste empfangen kann, die über das Netzwerk zur Verfügung gestellt werden, und wobei sie so ausgelegt ist, das sie unter der Steuerung eines in einem Browser ablaufenden Applets (102) die mit einem über das Netzwerk zur Verfügung gestellten Dienst verbundenen Aktivitäten überwacht und dabei gewonnene Informationen an eine Zentraleinheit (4) ausgibt, wobei die Endbenutzerkommunikationseinheit **dadurch gekennzeichnet ist, dass** sie zusätzlich die folgenden Bestandteile umfasst:
Mittel zur Ausgabe einer Aktivierungsmitteilung von der Kommunikationseinheit (1) an die Zentraleinheit (4); und
Mittel zum Empfang einer Konfigurationsmitteilung von der Zentraleinheit in Abhängigkeit von der Aktivierungsmitteilung, wobei die Konfigurationsmitteilung so ausgelegt ist, dass sie das Applet (102) zur Steuerung der an die Zentraleinheit gesandten informationen konfiguriert.

31. Kommunikationseinheit nach Anspruch 30, wobei über wenigstens eine Website oder eine andere elektronische Seite auf den Dienst zugegriffen wird und die Kommunikationseinheit so ausgelegt ist, dass sie den interaktiven Gehalt einer Seite identifiziert, während die Seite besucht und in die Kommunikationseinheit geladen wird.

32. Kommunikationseinheit nach Anspruch 31, wobei die identifizierung des interaktiven Gehalts die Bestimmung von Informationen umfasst, welche die Relevanz und/oder den Kontext des interaktiven Gehalts betreffen.

33. Kommunikationseinheit nach Anspruch 31 oder Anspruch 32, wobei die Kommunikationseinheit so ausgelegt ist, das sie wenigstens einen Teil der Informationen, die im Identifizierungsschritt durch die Kommunikationsvorrichtung gewonnen wurden, in die auszugebenden informationen mitaufnimmt.

34. Kommunikationseinheit nach Anspruch 31, wobei die Identifizierung des interaktiven Gehalts die Bestimmung von Informationen enthält, welche die Relevanz und/oder den Kontext des interaktiven Gehalts betreffen und wobei die Kommunikationseinheit so ausgelegt ist, dass sie diese kontextbezogenen Informationen mit Informationen über die überwachten Aktivitäten in Verbindung setzt.

35. Computerprogramm, umfassend Codeabschnitte, welche, wenn sie in Rechnermitteln geladen werden und ablaufen, dazu führen, dass die Rechnermittel das Verfahren nach einem der Ansprüche 1 bis 29 ausführen.

## Revendications

1. Procédé de surveillance du fonctionnement d'un service fourni sur un réseau (2) à une pluralité d'unités de communication (1), le procédé comprenant l'étape de réception au niveau d'une unité centrale (4), d'informations obtenues au niveau de chaque unité de communication sous le contrôle d'applets respectifs (102) s'exécutant dans des navigateurs pendant la surveillance d'une activité associée au service,
**caractérisé en ce que**
le procédé comprend, avant l'étape de réception d'informations, les étapes supplémentaires de :
réception, au niveau de l'unité centrale (4), de notifications d'activations en provenance des applets actifs (102) ; et
sortie, en provenance de l'unité centrale, de messages de configuration respectifs vers chaque unité de communication (1) de laquelle une notification d'activation a été reçue, lesquels messages sont agencés pour configurer les applets respectifs pour contrôler les informations envoyées à l'unité centrale.

2. Procédé selon la revendication 1 dans lequel les informations obtenues comprennent des détails d'une interaction de l'utilisateur avec une page électronique, telle qu'une page Web, accédée lors de l'utilisation du service.

3. Procédé selon la revendication 2 dans lequel lesdits détails comprennent un journal de position de dispositif de pointage et d'opération de sélection.

4. Procédé selon l'une quelconque des revendications 1 à 3 comprenant l'étape supplémentaire d'analyse des données reçues au niveau de l'unité centrale.

5. Procédé selon la revendication 4 dans lequel l'étape d'analyse comprend un filtrage des données de sorte qu'elles peuvent être présentées sous une forme plus commode.

6. Procédé selon la revendication 5 comprenant l'étape de spécification d'au moins une règle de filtre pour une utilisation dans le processus de filtre.

7. Procédé selon la revendication 6 dans lequel l'au moins une règle de filtre définit un événement standard qui comprend un jeu prédéterminé d'occurrences.

8. Procédé selon l'une quelconque des revendications précédentes dans lequel une source de référence du temps universel est fournie au niveau de l'unité centrale et le procédé comprend l'étape d'horodatage de données reçues en fonction du temps universel.

9. Procédé selon l'une quelconque des revendications 1 à 8 dans lequel, l'unité centrale comprend un cache page comprenant une partie du source ou le source complet pour des pages et des sommes de contrôle correspondantes et le procédé comprend les étapes supplémentaires de, réception, en provenance d'une unité de communication, d'une somme de contrôle calculée à partir du source d'une page d'intérêt acheminée initialement à l'unité de communication dans le cadre du service, comparaison de la somme de contrôle reçue avec celles mémorisées dans le cache page et de requête à l'unité de communication pour envoyer tout le source disponible pour la page d'intérêt si aucune correspondance de somme de contrôle n'est trouvée dans l'étape de comparaison.

10. Procédé selon l'une quelconque des revendications 1 à 9 dans lequel, des sessions entre l'unité centrale et les unités de communication respectives sont créées et le procédé comprend l'étape supplémentaire de fourniture d'identifiants de session respectifs à des unités de communication d'utilisateur final respectives au début de chaque session, en réponse à la réception d'une notification d'activation en provenance des unités de communication respectives.

11. Procédé selon la revendication 10 dans lequel il existe une pluralité d'unités centrales agencées chacune pour recevoir des informations obtenues au niveau d'unités de communication respectives pendant la surveillance d'une activité associée à des services respectifs.

12. , Procédé selon la revendication 11 dans lequel des sessions entre un appareil de communication respectif et la pluralité d'unités centrales sont créées et se voient attribuer des identifiants de session, de telle sorte qu'une activité associée à une pluralité de services séparés peut être surveillée dans une session et associée à un identifiant de session commun.

13. Procédé selon la revendication 12 comprenant l'étape de l'une des unités centrales dans la pluralité fournissant l'identifiant de session à une unité de communication d'utilisateur final respective au début de la session, en réponse à la réception d'une notification d'activation en provenance de l'unité de communication.

14. Procédé de surveillance du fonctionnement de services fournis sur un réseau à une pluralité d'unités de communication d'utilisateur final (1), le procédé comprenant, au niveau de chaque unité de communication d'utilisateur final (1), sous le contrôle d'un applet (102) s'exécutant dans un navigateur, les étapes de :
surveillance d'une activité associée à un service ;
transmission des informations obtenues dans l'étape de surveillance à une unité centrale (4) ;
et **caractérisé en ce que** le procédé comprend en outre, avant les étapes ci-dessus, les étapes supplémentaires de sortie d'une notification d'activation en provenance de l'unité de communication (1) vers l'unité centrale (4) ; et
réception d'un message de configuration en provenance de l'unité centrale (4) en réponse à la notification d'activation, lequel message est agencé pour configurer l'applet (102) pour contrôler les informations envoyées à l'unité centrale (4).

15. Procédé selon la revendication 14 dans lequel le service est accédé par l'intermédiaire d'au moins une page Web ou une autre page électronique et le procédé comprend l'étape supplémentaire d'identification du contenu interactif d'une page alors que la page est visitée et chargée dans l'unité de communication.

16. Procédé selon la revendication 15 dans lequel l'étape d'identification du contenu interactif comprend une détermination d'informations concernant la pertinence et/ou le contexte du contenu interactif.

17. , Procédé selon la revendication 15 ou la revendication 16 dans lequel au moins une partie des informations obtenues dans l'étape d'identification est comprise dans les informations sorties par le dispositif de communication.

18. Procédé selon la revendication 17 dans lequel l'étape d'identification du contenu interactif comprend une détermination d'informations concernant la pertinence et/ou le contexte du contenu interactif et le procédé comprend l'étape supplémentaire d'association de ces informations contextuelles aux informations concernant des activités surveillées.

19. Procédé selon l'une quelconque des revendications 14 à 18 dans lequel l'étape de surveillance d'une activité comprend une surveillance de position de dispositif de pointage et/ou d'opération de sélection.

20. Procédé selon l'une quelconque des revendications 14 à 19 dans lequel l'applet s'exécute dans un navigateur et s'exécute dans un langage qui est multiplate-forme.

21. Procédé selon la revendication 20 dans lequel l'applet est non persistant.

22. Procédé selon l'une quelconque des revendications 14 à 21 dans lequel l'étape de surveillance comprend une surveillance pour une séquence prédéterminée d'occurrences associées à un service fourni sur le réseau et l'étape de sortie comprend une sortie d'informations sur le réseau vers une unité centrale lorsque la séquence prédéterminée d'occurrences est détectée.

23. Procédé selon la revendication 22 dans lequel la séquence prédéterminée d'occurrences est définissable par un opérateur.

24. Procédé selon la revendication 22 ou la revendication 23 dans lequel les informations comprennent un message indiquant la détection d'une séquence prédéterminée.

25. Procédé selon l'une quelconque des revendications 22 à 24 dans lequel les informations comprennent des données concernant les occurrences elles-mêmes.

26. Procédé selon l'une quelconque des revendications 14 à 25 dans lequel les informations envoyées à l'unité centrale se rapportent à au moins une partie du source, tel que HTML, reçue initialement par l'unité de communication relativement au service.

27. Procédé selon la revendication 26 dans lequel les informations comprennent tout le source pour une page d'intérêt sélectionnée.

28. Procédé selon la revendication 26 dans lequel les informations envoyées à l'unité centrale comprennent une somme de contrôle calculée sur la base d'au moins une partie du source, tel que HTML, reçue initialement par l'unité de communication relativement au service.

29. Procédé selon la revendication 28 dans lequel la somme de contrôle est calculée sur tout le source disponible pour une page d'intérêt sélectionnée.

30. Unité de communication d'utilisateur final (1) pour une utilisation dans un système de surveillance du fonctionnement de services fournis sur un réseau (2), l'unité de communication (1) étant agencée pour permettre une réception de services fournis sur le réseau, et étant agencée, sous le contrôle d'un applet (102) s'exécutant dans un navigateur, pour surveiller une activité associée à un service fourni sur le réseau et sortir des informations ainsi obtenues vers une unité centrale (4), l'unité de communication d'utilisateur final étant **caractérisées en ce qu'**elle comprend en outre
des moyens de sortie d'une notification d'activation en provenance de l'unité de communication (1) vers l'unité centrale (4) ; et
des moyens de réception d'un message de configuration en provenance de l'unité centrale en réponse à la notification d'activation, lequel message est agencé pour configurer l'applet (102) pour contrôler les informations envoyées à l'unité centrale.

31. Unité de communication selon la revendication 30, dans laquelle le service est accédé par l'intermédiaire d'au moins une page Web ou une autre page électronique et l'unité de communication est agencée pour identifier le contenu interactif d'une page alors que la page est visitée et chargée dans l'unité de communication.

32. Unité de communication selon la revendication 31 dans laquelle l'identification du contenu interactif comprend une détermination d'informations concernant la pertinence et/ou le contexte du contenu interactif.

33. Unité de communication selon la revendication 31 ou la revendication 32 qui est agencée pour comprendre au moins une partie des informations obtenues dans l'étape d'identification dans les informations sorties par le dispositif de communication.

34. Unité de communication selon la revendication 31 dans laquelle l'identification du contenu interactif comprend une détermination d'informations concernant la pertinence et/ou le contexte du contenu interactif et l'unité de communication étant agencée pour associer ces informations contextuelles aux informations concernant des activités surveillées.

35. Programme informatique comprenant des parties de code qui une fois chargées et exécutées sur des moyens informatiques amène les moyens informatiques à exécuter le procédé de l'une quelconque des revendications 1 à 29.
